# EUROPÄISCHE PATENTANMELDUNG

(11) **EP 2 690 258 A1**
(43) Veröffentlichungstag der Anmeldung: **29.01.2014**
(21) Anmeldenummer: 12177570.4
(22) Anmeldetag: 24.07.2012
(51) Int. Cl.: F01D 11/02, F01D 11/04, F16J 15/40

(54) **Dichtungsanordnung einer Dampfturbine wobei eine Sperrflüssigkeit und eine Wrasendampfabsaugung verwendet wird**

(71) Anmelder: Siemens Aktiengesellschaft, 80333 München (DE)
(72) Erfinder: Flegler, Johan, 45131 Essen (DE); Helmis, Thomas, 45472 Mülheim an der Ruhr (DE); Sürken, Norbert, 45468 Mülheim a.d. Ruhr (DE)

(57) **Zusammenfassung**

Die Erfindung betrifft eine Dichtungsanordnung (22) für eine Durchführung einer um eine Achse rotierenden Welle (16) durch ein feststehendes Gehäuse, wobei statt eines Sperrdampfes eine Sperrflüssigkeit zur Abdichtung verwendet wird.

## Beschreibung

Die Erfindung betrifft eine Dichtungsanordnung für eine Durchführung einer um eine Achse rotierenden Welle durch ein feststehendes Gehäuse, welches einen mit einem Fluid beaufschlagbaren Innenraum umschließt, aus dem die Welle austritt, mit einer Dichtung, welche eine Wrasendampfabsaugung umfasst.

Die Erfindung betrifft ferner ein Verfahren zur Abdichtung einer Welle und des Gehäuses einer Dampfturbine.

Im Strömungsmaschinenbau, insbesondere im Dampfturbinenbau, werden diese derart ausgeführt, dass eine Abdichtung realisiert wird, so dass keine Umgebungsluft in die Dampfturbine eindringen kann. Dazu werden verschiedenartige Dichtungen verwendet. Beispielsweise wird Sperrdampf dazu verwendet, ein Eintreten der Luft in die Turbine zu verhindern. Allerdings wird der dazu verwendete Sperrdampf aus dem Dampfkreislauf entnommen und trägt somit nicht zur Energiewandlung bei, was dazu führt, dass der Wirkungsgrad des gesamten Turbinenstrangs verschlechtert wird.

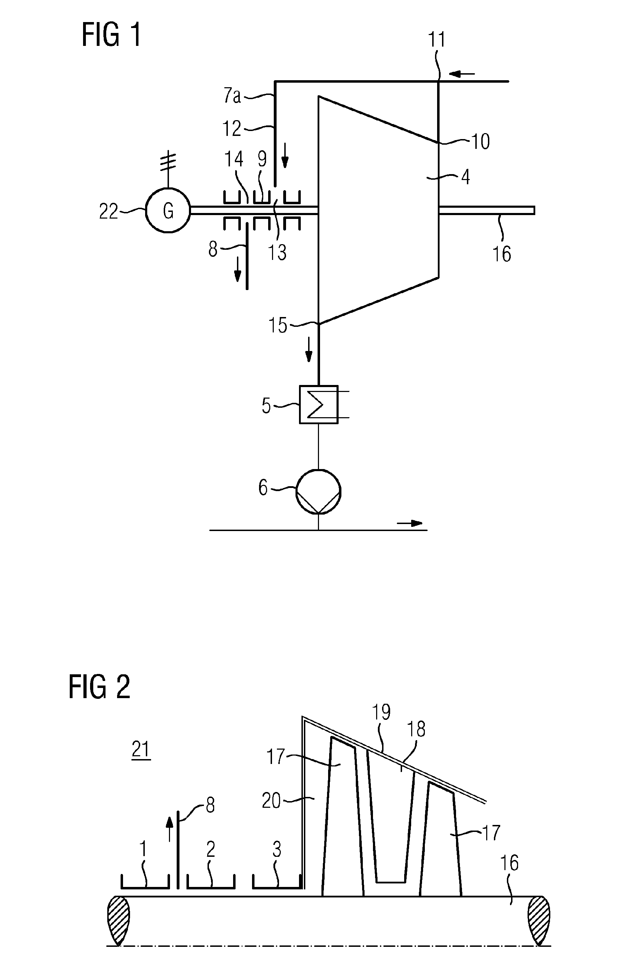

Die Figur 1 zeigt den bekannten Stand der Technik. Eine für Niederdruck ausgebildete Dampfturbine 4 wird über eine Einströmöffnung 10 mit Frischdampf versorgt. Die Erzeugung des Frischdampfes ist in der Figur 1 nicht näher dargestellt. Ein Teil des Frischdampfes wird an einer Abzweigung 11 über eine Anzapfleitung 7a zur Dichtung 9 geführt. Die Anzapfleitung 7a ist demnach als Sperrdampfleitung 12 ausgebildet und führt somit Sperrdampf in einen Sperrdampfbereich 13. Im Sperrdampfbereich 13 bewegt sich der Sperrdampf durch Dichtungen nach links und nach rechts, wobei eine Strömung des Sperrdampfes nach links in eine Wrasendampfkammer 14 führt. In dieser Wrasendampfkammer 14 herrscht ein geringfügig niedrigerer Druck als in der Umgebung, so dass eine Wrasendampfabsaugung 8 die Mischung aus aus der Umgebung angesaugten Luft und des aus dem Sperrdampfbereich 13 geführten Dampfes abgesaugt wird. Somit kann ein in der Dampfturbine 4 geführter Dampf nicht in die Umgebung austreten.

Der Dampf, dessen thermische Energie in der Dampfturbine 4 in mechanische Energie umgewandelt wird, strömt über eine Auslassöffnung 15 zu einem Kondensator 5. In dem Kondensator 5 kondensiert der Dampf zu Wasser und wird über eine Pumpe 6 dem Wasserdampfkreislauf wieder zugeführt. Der Druck des Sperrdampfes ist über dem Druck der Atmosphäre. Um den Bedarf an Sperrdampf und die damit verbundenen Verluste möglichst gering zu halten, werden Dichtungen eingebaut, die möglichst effizient sind. Dies kann erfolgen durch Dichtungen großer Baulänge oder durch hocheffiziente Dichtungssysteme, wie z. B. die Bürstendichtungen. In den Dokumenten US 6,918,252, DE 43 13 805, US 4,191,021 und DE 10 2007 037311 sind verschiedene Dichtungsmöglichkeiten offenbart.

Mit der Erfindung wird nun ein neuer Weg eingeschlagen, die die des erforderlichen Sperrdampfes ermöglichen soll. Somit lautet die Aufgabe der Erfindung, den Wirkungsgrad einer Dampfturbine zu erhöhen.

Gelöst wird diese Aufgabe durch eine Dichtungsanordnung für eine Durchführung einer um eine Achse rotierenden Welle durch ein feststehendes Gehäuse, welches einen mit einem Fluid beaufschlagbaren Innenraum umschließt, aus dem die Welle austritt, mit einer Dichtung, welche eine Wrasendampfabsaugung umfasst, wobei eine Einleitung, die zwischen dem Innenraum und der Wrasendampfabsaugung angeordnet ist und für die Zuführung einer Sperrflüssigkeit ausgebildet ist.

Des Weiteren wird die Aufgabe gelöst durch eine Dampfkraftanlage umfassend eine Dampfturbine mit einer erfindungsgemäßen Dichtungsanordnung.

Des Weiteren wird die Aufgabe gelöst durch ein Verfahren zur Abdichtung einer Welle und des Gehäuses einer Dampfturbine, wobei eine Wrasendampfabsaugung vorgesehen und eine Sperrflüssigkeit verwendet wird.

Die Erfindung schlägt somit vor, die Verluste zu minimieren, indem auf die Verwendung von Sperrdampf gänzlich verzichtet wird. Vielmehr schlägt die Erfindung vor, anstelle von Sperrdampf eine Sperrflüssigkeit zu verwenden. Als Sperrflüssigkeit wird beispielsweise Wasser verwendet. Der Vorteil liegt somit darin, dass ein vorher benötigtes Sperrdampfsystem eines Dampfturbinenstranges gänzlich entfallen kann. Das führt zur Einsparung von Kosten, die sich aus einer Verrohrung des Sperrdampfsystems zwangsläufig ergeben. Somit kann der Sperrdampf, der vorher nicht an der Energieumwandlung teilgenommen hat, nunmehr an der Energieumwandlung teilnehmen, was zu einer Erhöhung des Wirkungsgrades führt.

In den Unteransprüchen sind vorteilhafte Weiterbildungen angegeben.

So wird in einer ersten vorteilhaften Weiterbildung eine Labyrinthdichtung verwendet, um den Verlust an Sperrflüssigkeit zu minimieren.

In weiteren vorteilhaften Weiterbildungen wird die Dampfturbine mit einem Kondensator verbunden, wobei das für die Sperrflüssigkeit benötigte Wasser aus dem Kondensator entnommen wird. Somit kann das Wasser direkt aus dem Wasserdampfkreislauf entnommen werden. Vorteilhafterweise wird die Einleitung mit dem Hotwell des Kondensators verbunden.

In einer besonderen vorteilhaften Weiterbildung wird die Dampfkraftanlage derart weitergebildet, dass das Wasser und die Welle derartige Temperaturen aufweisen, dass das Wasser beim Auftreffen auf die Welle verdampft. Dadurch ist eine sehr gute Kühl- und Abdichtmöglichkeit gegeben.

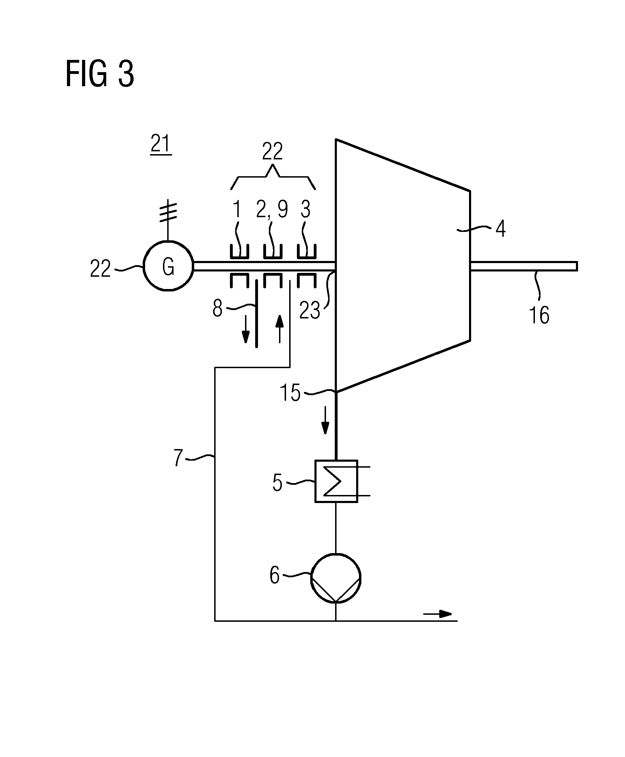

Ein Ausführungsbeispiel der Erfindung wird nachfolgend anhand der Figuren 2 und 3 dargestellt.

Es zeigen
- Figur 2: eine Schnittdarstellung durch eine schematisch dargestellte Dampfturbine,
- Figur 3: eine schematische Darstellung einer erfindungsgemäßen Dichtung.

Die Figur 2 zeigt in schematischer Weise eine Welle 16 einer Dampfturbine 4. Auf der Welle 16 sind mehrere Laufschaufeln 17 angeordnet, zwischen denen mehrere Leitschaufeln 18 an einem Gehäuse 19 fest angeordnet sind. Damit der in einem Strömungskanal 20 befindliche Prozessdampf nicht in die Umgebung 21 strömt, ist eine erste Dichtung 3 angeordnet. Zur Umgebung 21 hin sind mit einem Abstand versehen eine zweite Dichtung 2 und eine dritte Dichtung 1 angeordnet.

Zwischen der ersten Dichtung 3 und der Welle 16 kann Prozessdampf ausströmen. Deswegen wird zwischen der zweiten Dichtung 2 und der ersten Dichtung 3 eine Sperrflüssigkeit aus einer Anzapfleitung 7 beströmt. Diese kann sich zur Umgebung 21 und zum Strömungskanal 20 ausdehnen. Zwischen der dritten Dichtung 1 und der zweiten Dichtung 2 wird eine Wrasendampfabsaugung 8 angeordnet. Somit kann kein Prozessdampf aus dem Strömungskanal 20 in die Umgebung 21 strömen.

Gemäß Figur 3 wird nun erfindungsgemäß die Anzapfleitung 7 mit dem Ausgang der Pumpe 6 verbunden, so dass statt eines Sperrdampfes eine Sperrflüssigkeit auf die Welle kommt.

Die erste Dichtung 3, die zweite Dichtung 2 und die dritte Dichtung 1 bilden somit eine Dichtungsanordnung 22. Mit dieser Dichtungsanordnung 22 wird eine Durchführung 23 einer um eine Achse rotierenden Welle 16 durch ein feststehendes Gehäuse (nicht näher dargestellt) realisiert. In diesem feststehenden Gehäuse ist ein mit Fluid beaufschlagbarer Innenraum eingeschlossen, aus dem die Welle 16 herausragt. Als Dichtungen können herkömmliche Labyrinthdichtungen, Bürstendichtungen mit metallischen Borsten, Bürstendichtungen mit Borsten aus natürlichen Fasern und/oder Bürstendichtungen mit Borsten aus künstlichen Fasern (Aramid oder Kevlar) verwendet werden. Darüber hinaus sind einfache Ringspalte oder konische Ringspalte als Dichtungen möglich.

Als Sperrflüssigkeit wird ein Deionat bzw. Speisewasser verwendet. Diese Sperrflüssigkeit ist ohnehin in einem Dampfkraftwerk vorhanden, so dass keine zusätzlichen Sperrflüssigkeitsquellen berücksichtigt werden müssen.

Die Nutzung von Speisewasser ist vorteilhaft nahe, da diese in räumlicher Nähe zur Dampfturbine 4 zur Verfügung steht, z. B. im Hotwell des Kondensators 5. Die Anhebung des Druckniveaus zur Versorgung des Dichtungsbereichs kann entweder durch ein Hilfsaggregat oder durch die vorhandenen Pumpen zur Abförderung des Speisewassers am Kondensator 5 erfolgen. Einfache Regelmechanismen tragen dafür Sorge, dass der Druckunterschied zwischen Atmosphäre und Sperrflüssigkeit nur gering ausfällt. Somit kann die Menge des zur Sperrung verwendeten Fluids gering gehalten werden. Ein besonderer Vorteil kann beim Einsatz von Kunstfasern wie z. B. in Stopfbuchsen im Bereich der Abdichtung von Dampfturbinen 4 realisiert werden. Hierbei wird das eingebrachte Wasser einer definierten Temperatur in der Nähe des Siedepunktes bei einem Druck zwischen dem Druck des Dichtfluides und dem des abzudichtenden Dampfraums, der im Vakuum ist, durch den Druckunterschied auf der durchwärmten Welle verdampft. Die begleitende, über das Faserpaket stetige Volumenzunahme, die bei einem Faktor um die 1000 liegt, führt bei stark reduziertem Dichtfluidbedarf bei einer optimalen Dichtwirkung der Stopfbuchse.

Hierbei können insbesondere die Eigenschaften des Kunstfaserpakets gegenüber anderen möglichen Lösungen positiv wirken, da sie durch die geringen Faserdurchmesser ein sehr große Verdampfungsoberfläche sowie über die Kapillarwirkung über gute Transporteigenschaften verfügen. Die im Vergleich zu anderen Fasern geringe Adhäsionsneigung kann über geeignete Beschichtungssysteme der Faser weiter verbessert werden.

## Patentansprüche

1. Dichtungsanordnung (22) für eine Durchführung einer um eine Achse rotierenden Welle (16) durch ein feststehendes Gehäuse,
welches einen mit einem Fluid beaufschlagbaren Innenraum umschließt, aus dem die Welle (16) austritt,
mit einer Dichtung (9), welche eine Wrasendampfabsaugung (8) umfasst,
**gekennzeichnet durch**
eine Einleitung, die zwischen dem Innenraum und der Wrasendampfabsaugung (8) angeordnet ist und für die Zuführung einer Sperrflüssigkeit ausgebildet ist.

2. Dichtungsanordnung (22) nach Anspruch 1,
wobei eine Labyrinthdichtung, eine Bürstendichtung mit metallischen Borsten, eine Bürstendichtung mit Borsten aus natürlichen Fasern, eine Bürstendichtung aus künstlichen Fasern aus Aramid oder Kevlar zum Abdichten gegenüber dem Innenraum und der Wrasendampfabsaugung (8) angeordnet ist.

3. Dichtungsanordnung (22) nach Anspruch 1 oder 2,
wobei die Einleitung für die Zuführung von Wasser als Sperrflüssigkeit ausgebildet ist.

4. Dichtungsanordnung (22) nach einem der vorhergehenden Ansprüche,
wobei die Dichtung (9) als Stopfbuchse ausgebildet ist.

5. Dichtungsanordnung (22) nach Anspruch 4,
wobei als Stopfbuchse Fasern, insbesondere Kunstfasern, verwendet werden.

6. Dampfkraftanlage
umfassend eine Dampfturbine (4) mit einer Dichtungsanordnung (22) gemäß einem der Ansprüche 1 bis 5,
mit einem Kondensator (5),
wobei die Einleitung mit dem Kondensator (5) verbunden ist.

7. Dampfkraftanlage nach Anspruch 6,
wobei die Einleitung mit dem Hotwell des Kondensators (5) verbunden ist.

8. Dampfkraftanlage nach Anspruch 6 oder 7,
wobei das Wasser und die Welle (16) derartige Temperaturen aufweisen, dass das Wasser beim Auftreffen auf die Welle (16) verdampft.

9. Dampfkraftanlage nach einem der Ansprüche 6 bis 8,
mit einer als Stopfbuchse ausgebildeten Dichtung (9) zwischen der Einleitung und der Wrasendampfabsaugung (8).

10. Dampfkraftanlage nach Anspruch 9,
wobei die Stopfbuchse Kunstfasern umfasst.

11. Verfahren zur Abdichtung einer Welle (16) und des Gehäuses einer Dampfturbine (4),
**dadurch gekennzeichnet, dass**
eine Wrasendampfabsaugung (8) vorgesehen und eine Sperrflüssigkeit verwendet wird.
